# EUROPEAN PATENT APPLICATION

(11) **EP 2 995 669 A1**
(43) Date of publication of application: **16.03.2016**
(21) Application number: 15184580.7
(22) Date of filing: 10.09.2015
(51) Int. Cl.: C09K 8/584, A01N 41/04, A61K 8/46, C07C 309/04, C07C 309/05

(54) **ALKANE SULFONIC ACID OR SULFONATE COMPOSITION AND USE THEREOF IN ENHANCED OIL RECOVERY**

(30) Priority: 12.09.2014 EP 14184567
(71) Applicant: Shell Internationale Research Maatschappij B.V., 2596 HR Den Haag (NL)
(72) Inventor: MUL, Pim, 1031HW AMSTERDAM (NL); ROMMENS, Hidde Cornelis Willem, 1031 HW AMSTERDAM (NL)
(74) Representative: Matthezing, Robert Maarten

(57) **Abstract**

The invention relates to an alkane sulfonic acid or sulfonate composition, which comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1. Further, the invention relates to a process for treatment of an alkane sulfonic acid or sulfonate composition, wherein substantially all of the disubstituted alkane is removed or the disubstituted alkane is removed to such extent that the molar ratio of the monosubstituted alkane to the disubstituted alkane is increased to a value which is equal to or higher than 12:1. Still further, the invention relates to a method of treating a hydrocarbon containing formation using such composition, containing no or less disubstituted alkane, as surfactant.

## Description

### Field of the invention

The present invention relates to an alkane sulfonic acid or sulfonate composition, to a process for treatment of an alkane sulfonic acid or sulfonate composition, and to a method of treating a hydrocarbon containing formation using an alkane sulfonic acid or sulfonate composition as surfactant.

### Background of the invention

It is known to make alkane sulfonic acids from alkanes (paraffins) by means of sulfoxidation of the alkanes, mostly linear alkanes (n-paraffins) which are usually in the range of C₁₂ to C₁₈. In such sulfoxidation, the alkane is reacted with sulfur dioxide (SO₂) and oxygen (O₂) in the presence of water whilst irradiating with ultraviolet (UV) light. By such irradiation, triplet sulfur dioxide is formed which in turn initiates the formation of alkyl radicals which are mostly secondary alkyl radicals. The alkyl radicals react with sulfur dioxide and then with oxygen, thereby forming radicals of the formula RS(=O)₂OO·. Abstraction of a hydrogen atom by such radical results in the formation of an alkyl radical and RS(=O)₂OOH. The latter peroxysulfonic acid is reduced by sulfur dioxide in the presence of water into the corresponding alkane sulfonic acid (RSO₃H) and sulfuric acid (H₂SO₄). The overall reaction is:

RH + 2SO₂ + O₂ + H₂O → RSO₃H + H₂SO₄

The alkane sulfonic acid (RSO₃H) may be converted into an anionic alkane sulfonate by reaction with a base, such as for example sodium hydroxide:

RSO₃H + NaOH → RSO₃Na + H₂O

Further, it is known to make alkane sulfonyl chlorides from alkanes (paraffins) by means of sulfochlorination of the alkanes and to hydrolyse such alkane sulfonyl chlorides into the corresponding alkane sulfonic acids. In such sulfochlorination, the alkane is reacted with sulfur dioxide (SO₂) and chlorine (Cl₂) whilst irradiating with visible light. By such irradiation, chlorine is dissociated into two chlorine radicals. Abstraction of hydrogen atoms by the chlorine radicals results in the formation of alkyl radicals which are mostly secondary alkyl radicals. Such alkyl radical reacts with sulfur dioxide and then with chlorine, thereby forming an alkane sulfonyl chloride (RSO₂Cl) and a chlorine radical. The overall reaction is:

RH + SO₂ + Cl₂ → RSO₂Cl + HCl

Using water, the alkane sulfonyl chloride (RSO₂Cl) may be hydrolysed into the corresponding alkane sulfonic acid (RSO₃H):

RSO₂Cl + H₂O → RSO₃H + HCl

Alternatively, the alkane sulfonyl chloride (RSO₂Cl) may be saponified into the corresponding anionic alkane sulfonate, using for example sodium hydroxide:

RSO₂Cl + 2NaOH → RSO₃Na + NaCl + H₂O

Such processes for preparing alkane sulfonic acids and sulfonates from alkanes involving sulfoxidation or sulfochlorination of the alkanes are for example described by H.G. Hauthal in "Alkanesulfonates" (Chapter 4, pages 143-221) in "Anionic surfactants: organic chemistry", edited by H.W. Stache (Surfactant science series, volume 56), Marcel Dekker, Inc., New York, 1995.

In the above-mentioned processes involving sulfoxidation or sulfochlorination of alkanes, a mixture of monosulfonic acids and disulfonic acids is formed. In practice, it is not possible to prevent the formation of such disulfonic acids. Consequently, reaction of such mixture with a base, such as for example sodium hydroxide, results in a mixture of monosulfonates and disulfonates. Commercial products comprising secondary alkane sulfonates (SAS) obtained by sulfoxidation of n-paraffins and subsequent neutralisation (reaction with a base) are for example the Hostapur® SAS products produced by Clariant (taken over by Weylchem per 1 January 2014). Some commercially available grades are Hostapur SAS 30, Hostapur SAS 60, Hostapur SAS 93 and Hostapur SAS 93 G, wherein said numbers 30, 60 and 93 refer to the active matter content (in %). These products are described in a brochure entitled "Hostapur ® SAS - A traditional specialty for innovative cleaner" by Clariant International Ltd., Muttenz, Switzerland, pages 1-56, 2013.

As appears from said Clariant brochure, the above-mentioned Hostapur SAS products are so-called sodium C14-17 secondary alkane sulfonates. Further, these products have been made by sulfoxidation of a mixture of n-paraffins. Still further, it appears from said brochure that the Hostapur SAS products contain monosulfonates and disulfonates in a ratio of about 9:1 (mono:di).

Still further, it is known to use alkane sulfonates as surfactants in methods of treating hydrocarbon containing formations, such as oil containing formations, in order to recover hydrocarbons therefrom. In the above-mentioned Clariant brochure, it is suggested that Hostapur SAS is used in the "tertiary recovery of oil". Further, the following publications disclose the use of alkane sulfonates as surfactants in such methods: EP0353469A1, EP0302404A1, US4842067, US4722396 and US4295980.

Hydrocarbons, such as oil, may be recovered from hydrocarbon containing formations (or reservoirs) by penetrating the formation with one or more wells, which may allow the hydrocarbons to flow to the surface. A hydrocarbon containing formation may have one or more natural components that may aid in mobilising hydrocarbons to the surface of the wells. For example, gas may be present in the formation at sufficient levels to exert pressure on the hydrocarbons to mobilise them to the surface of the production wells. These are examples of so-called "primary oil recovery".

However, reservoir conditions (for example permeability, hydrocarbon concentration, porosity, temperature, pressure, composition of the rock) can significantly impact the economic viability of hydrocarbon production from any particular hydrocarbon containing formation. Furthermore, the above-mentioned natural pressure-providing components may become depleted over time, often long before the majority of hydrocarbons have been extracted from the reservoir. Therefore, supplemental recovery processes may be required and used to continue the recovery of hydrocarbons, such as oil, from the hydrocarbon containing formation. Such supplemental oil recovery is often called "secondary oil recovery" or "tertiary oil recovery". Examples of known supplemental processes include waterflooding, polymer flooding, gas flooding, alkali flooding, thermal processes, solution flooding, solvent flooding, or combinations thereof.

In recent years there has been increased activity in developing new and improved methods of chemical Enhanced Oil Recovery (cEOR) for maximising the yield of hydrocarbons from a subterranean reservoir. In surfactant cEOR, the mobilisation of residual oil is achieved through surfactants which generate a sufficiently low crude oil / water interfacial tension (IFT) to give a capillary number large enough to overcome capillary forces and allow the oil to flow (Lake, Larry W., "Enhanced oil recovery", PRENTICE HALL, Upper Saddle River, New Jersey, 1989, ISBN 0-13-281601-6).

However, different reservoirs can have different characteristics (for example composition of the rock, crude oil type, temperature, water composition - salinity, hardness etc.), and therefore, it is desirable that the structures and properties of the added surfactant(s) be matched to the particular conditions of a reservoir to achieve the required low IFT. In addition, other important criteria may have to be fulfilled, such as low rock retention or adsorption, compatibility with polymer, thermal and hydrolytic stability and acceptable cost (including ease of commercial scale manufacture).

In the present invention, it is desired to provide compositions and methods for cEOR utilising alkane sulfonic acids or sulfonates as surfactant. More in particular, to provide alkane sulfonic acids or sulfonates which have an improved cEOR performance, for example in terms of reducing the interfacial tension (IFT), as already described above. Further cEOR performance parameters of potential relevance are optimal salinity and aqueous solubility at such optimal salinity. By "optimal salinity", reference is made to the salinity of the brine present in a mixture comprising said brine (a salt-containing aqueous solution), the hydrocarbons (e.g. oil) and the surfactant(s), at which salinity said IFT is lowest. The salinity of the brine as present in oil-containing reservoirs may vary broadly, but in many reservoirs the brine salinity is between 1 and 5 wt.% of NaCl or between 1 and 10 wt.% of NaCl. Therefore, it is generally preferred that the optimal salinity of a surfactant composition likewise is between 1 and 10 wt.% of NaCl. In addition, it is preferred that at or close to such optimal salinity, the aqueous solubility of the surfactant is sufficient to good. Thus, in the present invention, it is desired to improve one or more of these cEOR performance parameters for alkane sulfonic acids or sulfonates.

### Summary of the invention

Surprisingly, it was found that an alkane sulfonic acid or alkane sulfonate composition having such improved cEOR performance parameter(s) is a composition which comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1 and is preferably in the range of from 12:1 to 10,000:1.

Accordingly, the present invention relates to an alkane sulfonic acid or alkane sulfonate composition as described above.

Further, the present invention relates to a process for treatment of an alkane sulfonic acid or alkane sulfonate composition, which composition comprises a monosubstituted alkane substituted by one sulfonic acid or sulfonate group and a disubstituted alkane substituted by two sulfonic acid or sulfonate groups, in which process substantially all of the disubstituted alkane is removed or the disubstituted alkane is removed to such extent that the molar ratio of the monosubstituted alkane to the disubstituted alkane is increased to a value which is equal to or higher than 12:1 and is preferably in the range of from 12:1 to 10,000:1.

Still further, the present invention relates to a method of treating a hydrocarbon containing formation, comprising the following steps:
a) providing the composition as described above or the composition as obtained by the process as described above to at least a portion of the hydrocarbon containing formation; and
b) allowing the alkane sulfonic acid or alkane sulfonate from the composition to interact with the hydrocarbons in the hydrocarbon containing formation.

### Brief description of the drawings

Figure 1 relates to an embodiment for application in cEOR.
Figure 2 relates to another embodiment for application in cEOR.

### Detailed description of the invention

In one aspect, the present invention relates to an alkane sulfonic acid or alkane sulfonate composition, which composition comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1 and is preferably in the range of from 12:1 to 10,000:1.

Thus, the composition of the present invention is an alkane sulfonic acid or alkane sulfonate composition, which comprises an alkane sulfonic acid or an alkane sulfonate. An alkane sulfonic acid is an alkane substituted by one or more sulfonic acid groups. An alkane sulfonate is an alkane substituted by one or more sulfonate groups.

In the present invention, said alkane sulfonic acid or alkane sulfonate composition comprises a monosubstituted alkane substituted by one sulfonic acid or sulfonate group and optionally a disubstituted alkane substituted by two sulfonic acid or sulfonate groups. This means that the composition of the present invention either comprises both said monosubstituted alkane and said disubstituted alkane or comprises said monosubstituted alkane and substantially no disubstituted alkane. Within the present specification, "substantially no" means that no detectible amount of the component in question is present in the composition.

Further, in the present invention, it is required in a case where the composition of the present invention comprises both said monosubstituted alkane and said disubstituted alkane, that the molar ratio of the monosubstituted alkane to the disubstituted alkane in said composition is equal to or higher than 12:1 and is preferably in the range of from 12:1 to 10,000:1.

It has appeared that the substantial absence of said disubstituted alkane in the composition of the present invention or the presence of said disubstituted alkane therein to such extent that the molar ratio of the monosubstituted alkane to the disubstituted alkane is equal to or higher than 12:1, and is preferably in the range of from 12:1 to 10,000:1, results in advantageous performance properties, especially in a case where the composition of the present invention is to be used in enhanced oil recovery (cEOR). More in particular, it was surprisingly found that by using the composition of the present invention which comprises substantially no disubstituted alkane or a reduced amount of said disubstituted alkane, improved cEOR performance parameters were obtained.

In the above-mentioned case where the composition of the present invention comprises both said monosubstituted alkane and said disubstituted alkane, said molar ratio of the monosubstituted alkane to the disubstituted alkane is at least 12:1, preferably at least 13:1, more preferably at least 14:1, more preferably at least 15:1, more preferably at least 16:1, more preferably at least 17:1, more preferably at least 18:1, more preferably at least 19:1, more preferably at least 20:1, more preferably at least 25:1, more preferably at least 30:1, more preferably at least 35:1, more preferably at least 40:1, more preferably at least 45:1, more preferably at least 50:1, more preferably at least 100:1, more preferably at least 150:1, most preferably at least 200:1.

Further, in the above-mentioned case where the composition of the present invention comprises both said monosubstituted alkane and said disubstituted alkane, said molar ratio of the monosubstituted alkane to the disubstituted alkane is preferably at most 10,000:1, more preferably at most 5,000:1, more preferably at most 1,000:1, more preferably at most 800:1, more preferably at most 700:1, more preferably at most 600:1, more preferably at most 500:1, more preferably at most 400:1, more preferably at most 350:1, most preferably at most 300:1.

Thus, in the above-mentioned case where the composition of the present invention comprises both said monosubstituted alkane and said disubstituted alkane, said molar ratio of the monosubstituted alkane to the disubstituted alkane may for example be of from 12:1 to 10,000:1, or 12:1 to 5,000:1, or 13:1 to 5,000:1, or 15:1 to 1,000:1, or 20:1 to 500:1.

Said molar ratio of the monosubstituted alkane to the disubstituted alkane may be determined by any method known to the skilled person. An example of such method is liquid chromatography-mass spectrometry (LC-MS). An alternative method is capillary electrophoresis with indirect UV detection, as for example described in "Indirect detection in capillary electrophoresis - Comparison between indirect UV and indirect laser-induced fluorescense detection for the determination of isoprenyl pyrophosphates", by P.E. Andersson et al., Journal of Chromatography A, 699, pages 323-330, 1995.

Thus, the composition of the present invention comprises an alkane sulfonic acid or alkane sulfonate. Said alkane sulfonic acid is prepared from an alkane and said alkane sulfonate is prepared from said alkane sulfonic acid. Within the present specification, an alkane and an alkane sulfonic acid or sulfonate comprise a mixture of alkane molecules and a mixture of alkane sulfonic acid or sulfonate molecules, respectively. That is to say, within the present specification, "alkane" as such refers to a mixture of alkane molecules whereas "alkane molecule" refers to one of the components from such mixture. Analogously, within the present specification, "alkane sulfonic acid" or "alkane sulfonate" as such refers to a mixture of alkane sulfonic acid or sulfonate molecules whereas "alkane sulfonic acid molecule" or "alkane sulfonate molecule" refers to one of the components from such mixture. Said molecules differ from each other for example in terms of carbon number and/or branching degree.

Branched alkane sulfonic acid or sulfonate molecules are alkane sulfonic acid or sulfonate molecules derived from alkane molecules which comprise one or more branches. Linear alkane sulfonic acid or sulfonate molecules are alkane sulfonic acid or sulfonate molecules derived from alkane molecules which are linear, that is to say which comprise no branches (unbranched alkane molecules). An alkane may be a mixture of linear alkane molecules and branched alkane molecules. Analogously, an alkane sulfonic acid or sulfonate may be a mixture of linear alkane sulfonic acid or sulfonate molecules and branched alkane sulfonic acid or sulfonate molecules.

An alkane and alkane sulfonic acid or sulfonate may be characterised by their carbon number and/or linearity. In case reference is made to an average carbon number, this means that the alkane or alkane sulfonic acid or sulfonate in question is a mixture of molecules which differ from each other in terms of carbon number.

Within the present specification, said average carbon number is determined by multiplying the number of carbon atoms of each molecule by the weight fraction of that molecule and then adding the products, resulting in a weight average carbon number. The average carbon number may be determined by gas chromatography (GC) analysis of the alkane.

Within the present specification, linearity is determined by dividing the weight of linear molecules by the total weight of branched, linear and cyclic molecules. Substituents (like the sulfonate group in alkane sulfonates) on the carbon chain are not seen as branches. The linearity may be determined by gas chromatography (GC) analysis of the alkane.

In the present invention, the alkane sulfonic acid or alkane sulfonate composition comprises a monosubstituted alkane substituted by one sulfonic acid or sulfonate group and a disubstituted alkane substituted by two sulfonic acid or sulfonate groups. Preferably, said alkanes are linear. Preferably at least 60 wt.%, more preferably at least 70 wt.%, more preferably at least 80 wt.%, most preferably at least 90 wt.% of the alkanes are linear. For example, 60 to 100 wt.%, more suitably 70 to 99 wt.%, most suitably 80 to 99 wt.% of the alkanes may be linear.

Further, preferably, said alkanes are not substituted by groups other than sulfonic acid and sulfonate groups. Further, preferably, said alkanes do not contain unsaturated bonds. Further, preferably, said alkanes have an average carbon number in the range of from 5 to 30, more preferably 8 to 28, more preferably 10 to 27, more preferably 12 to 26, more preferably 13 to 25, more preferably 14 to 24, more preferably higher than 15 to 24, more preferably 16 to 24, more preferably 17 to 24, more preferably 18 to 24, more preferably 19 to 24, more preferably 19 to 23, more preferably 20 to 24, more preferably 20 to 23, most preferably 18 to 22.

Still further, preferably, said alkanes may have a carbon number distribution within broad ranges. For example, in the present invention, one or more alkane sulfonic acids or alkane sulfonates may be selected from the group consisting of C₁₄₋₁₇ AS, C₁₈₋₂₀ AS, C₁₈₋₂₃ AS and C₁₉₋₂₄ AS, wherein "AS" stands for "alkane sulfonic acid" or "alkane sulfonate". More preferably, one or more alkane sulfonic acids or alkane sulfonates are selected from the group consisting of C₁₄₋₁₇ AS, C₁₈₋₂₀ AS and C₁₈₋₂₃ AS, even more preferably C₁₈₋₂₀ AS and C₁₈₋₂₃ AS. Most preferably, the alkane sulfonic acid or alkane sulfonate is C₁₈₋₂₃ AS.

"C₁₄₋₁₇ alkane sulfonic acid" or "C₁₄₋₁₇ alkane sulfonate" (C₁₄₋₁₇ AS) as used herein means a mixture of alkane sulfonic acids or alkane sulfonates, respectively, wherein the mixture has an average carbon number of from 14.5 to 16.5 and at least 50% by weight, preferably at least 70% by weight, more preferably at least 80% by weight, most preferably at least 90% by weight, of the alkane sulfonic acids or alkane sulfonates in the mixture contain from 14 to 17 carbon atoms.

Preferably 0 to 6, more preferably 0 to 4, most preferably 0 to 2 wt.% of said C₁₄₋₁₇ AS contains 13 or less carbon atoms. Preferably 20 to 60, more preferably 30 to 50, most preferably 35 to 45 wt.% of said C₁₄₋₁₇ AS contains 14 carbon atoms. Preferably 15 to 45, more preferably 20 to 40, most preferably 25 to 35 wt.% of said C₁₄₋₁₇ AS contains 15 carbon atoms. Preferably 8 to 32, more preferably 12 to 28, most preferably 15 to 25 wt.% of said C₁₄₋₁₇ AS contains 16 carbon atoms. Preferably 1 to 18, more preferably 4 to 15, most preferably 6 to 13 wt.% of said C₁₄₋₁₇ AS contains 17 carbon atoms. Preferably 0 to 6, more preferably 0 to 4, most preferably 0 to 2 wt.% of said C₁₄₋₁₇ AS contains 18 or more carbon atoms.

"C₁₈₋₂₀ alkane sulfonic acid" or "C₁₈₋₂₀ alkane sulfonate" (C₁₈₋₂₀ AS) as used herein means a mixture of alkane sulfonic acids or alkane sulfonates, respectively, wherein the mixture has an average carbon number of from 18.2 to 19.2 and at least 50% by weight, preferably at least 70% by weight, more preferably at least 80% by weight, most preferably at least 90% by weight, of the alkane sulfonic acids or alkane sulfonates in the mixture contain from 18 to 20 carbon atoms.

Preferably 0 to 6, more preferably 0 to 4, most preferably 0 to 2 wt.% of said C₁₈₋₂₀ AS contains 16 or less carbon atoms. Preferably 0 to 8, more preferably 0 to 6, most preferably 0 to 5 wt.% of said C₁₈₋₂₀ AS contains 17 carbon atoms. Preferably 25 to 65, more preferably 35 to 55, most preferably 40 to 50 wt.% of said C₁₈₋₂₀ AS contains 18 carbon atoms. Preferably 20 to 50, more preferably 25 to 45, most preferably 30 to 40 wt.% of said C₁₈₋₂₀ AS contains 19 carbon atoms. Preferably 6 to 30, more preferably 10 to 26, most preferably 13 to 23 wt.% of said C₁₈₋₂₀ AS contains 20 carbon atoms. Preferably 0 to 10, more preferably 0 to 8, most preferably 0 to 7 wt.% of said C₁₈₋₂₀ AS contains 21 carbon atoms. Preferably 0 to 6, more preferably 0 to 4, most preferably 0 to 2 wt.% of said C₁₈₋₂₀ AS contains 22 or more carbon atoms.

"C₁₈₋₂₃ alkane sulfonic acid" or "C₁₈₋₂₃ alkane sulfonate" (C₁₈₋₂₃ AS) as used herein means a mixture of alkane sulfonic acids or alkane sulfonates, respectively, wherein the mixture has an average carbon number of from 19 to 21 and at least 50% by weight, preferably at least 70% by weight, more preferably at least 80% by weight, most preferably at least 90% by weight, of the alkane sulfonic acids or alkane sulfonates in the mixture contain from 18 to 23 carbon atoms.

Preferably 0 to 6, more preferably 0 to 4, most preferably 0 to 2 wt.% of said C₁₈₋₂₃ AS contains 16 or less carbon atoms. Preferably 0 to 8, more preferably 0 to 6, most preferably 0 to 5 wt.% of said C₁₈₋₂₃ AS contains 17 carbon atoms. Preferably 1 to 18, more preferably 4 to 15, most preferably 6 to 13 wt.% of said C₁₈₋₂₃ AS contains 18 carbon atoms. Preferably 4 to 28, more preferably 8 to 24, most preferably 11 to 21 wt.% of said C₁₈₋₂₃ AS contains 19 carbon atoms. Preferably 8 to 32, more preferably 12 to 28, most preferably 15 to 25 wt.% of said C₁₈₋₂₃ AS contains 20 carbon atoms. Preferably 10 to 40, more preferably 15 to 35, most preferably 20 to 30 wt.% of said C₁₈₋₂₃ AS contains 21 carbon atoms. Preferably 8 to 32, more preferably 12 to 28, most preferably 15 to 25 wt.% of said C₁₈₋₂₃ AS contains 22 carbon atoms. Preferably 0 to 15, more preferably 1 to 12, most preferably 2 to 10 wt.% of said C₁₈₋₂₃ AS contains 23 carbon atoms. Preferably 0 to 6, more preferably 0 to 4, most preferably 0 to 2 wt.% of said C₁₈₋₂₃ AS contains 24 or more carbon atoms.

"C₁₉₋₂₄ alkane sulfonic acid" or "C₁₉₋₂₄ alkane sulfonate" (C₁₉₋₂₄ AS) as used herein means a mixture of alkane sulfonic acids or alkane sulfonates, respectively, wherein the mixture has an average carbon number of from 20 to 22 and at least 50% by weight, preferably at least 70% by weight, more preferably at least 80% by weight, most preferably at least 90% by weight, of the alkane sulfonic acids or alkane sulfonates in the mixture contain from 19 to 24 carbon atoms.

Within the present specification, where reference is made to relative (e.g. weight) amounts of components in a mixture of components (e.g. said C₁₄₋₁₇ AS, C₁₈₋₂₀ AS and C₁₈₋₂₃ AS mixtures of components having different carbon numbers), such relative amounts are to be selected such that the total amount of said mixture does not exceed 100%.

Further, for the mono- and disubstituted alkanes which are substituted by sulfonate groups (the alkane sulfonates), the cation may be any cation, such as an ammonium, alkali metal or alkaline earth metal cation, preferably an ammonium or alkali metal cation.

Generally, in alkane sulfonic acids and alkane sulfonates, the sulfonic acid or sulfonate group may be attached to a primary or secondary carbon atom. Preferably, in the present invention, the mono- and disubstituted alkanes are substituted by sulfonic acid or sulfonate groups at a secondary carbon atom. However, in the present invention, the alkane sulfonic acid or sulfonate composition may comprise primary and secondary alkane sulfonic acids and sulfonates. Preferably, in the present invention, at most 5%, more preferably at most 2%, more preferably at most 1%, most preferably at most 0.5%, of the sulfonic acid and sulfonate groups is attached to a primary carbon atom.

In the present invention, the alkane sulfonic acid or sulfonate composition may comprise compounds of formulas (I) and (II) as the monosubstituted alkane and disubstituted alkane, respectively: 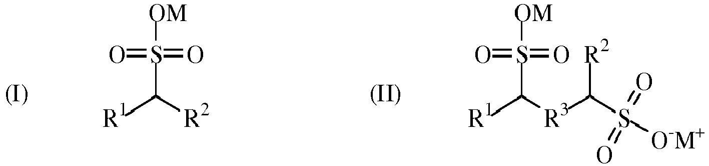 wherein the compound of formula (I) contains one sulfonic acid or sulfonate group and the compound of formula (II) contains two sulfonic acid or sulfonate groups; R¹ and R² are alkyl groups and R³ is a single bond or an alkylene group, which alkyl and alkylene groups are preferably linear, are preferably unsubstituted and preferably do not contain unsaturated bonds; and M is hydrogen or a cation as described above. Thus, the total carbon number for R¹ and R² and optionally R³ is preferably comprised within one of the above-mentioned average carbon number ranges.

The alkane sulfonic acid or sulfonate composition of the present invention may comprise one or more other surfactants that are suitable for use in methods of chemical Enhanced Oil Recovery (cEOR), such as for example internal olefin sulfonates (IOS), alkoxylated alcohol sulfates, carboxylates and glycerol sulfonates, linear alkyl benzene sulfonates (LABS), and heavy alkyl benzene sulfonates (HABS). Furthermore, alkane sulfonic acids or sulfonates, for which the molar ratio of the monosubstituted alkane to the disubstituted alkane is lower than 12:1, may also be added to the alkane sulfonic acid or sulfonate composition of the present invention.

In the present invention, a cosolvent (or solubilizer) may be added to increase the solubility of the alkane sulfonic acid or sulfonate surfactant in the alkane sulfonic acid or sulfonate composition of the present invention and/or in the below-mentioned injectable fluid comprising said composition. Suitable examples of cosolvents are polar cosolvents, including lower alcohols (for example sec-butanol and isopropyl alcohol) and polyethylene glycol. Any amount of cosolvent needed to dissolve all of the surfactant at a certain salt concentration (salinity) may be easily determined by a skilled person through routine tests.

Still further, the alkane sulfonic acid or sulfonate composition of the present invention may comprise a base (herein also referred to as "alkali"), preferably an aqueous soluble base, including alkali metal containing bases such as for example sodium carbonate and sodium hydroxide.

In another aspect, the present invention relates to a process for providing the above-described composition. More in particular, the present invention further relates to a process for treatment of an alkane sulfonic acid or alkane sulfonate composition, which composition comprises a monosubstituted alkane substituted by one sulfonic acid or sulfonate group and a disubstituted alkane substituted by two sulfonic acid or sulfonate groups, in which process substantially all of the disubstituted alkane is removed or the disubstituted alkane is removed to such extent that the molar ratio of the monosubstituted alkane to the disubstituted alkane is increased to a value which is equal to or higher than 12:1 and is preferably in the range of from 12:1 to 10,000:1. Within the present specification, removal of "substantially all" of the disubstituted alkane means that no detectible amount of the disubstituted alkane remains behind in the composition.

However, it is also envisaged that the method for preparing alkane sulfonic acids and alkane sulfonates in question may be performed in such way that the product obtained in such preparation method comprises substantially less disubstituted alkane, for example to such extent that the molar ratio of the monosubstituted alkane to the disubstituted alkane is in the range of from 12:1 to 100:1 or of from 12:1 to 50:1. This may be achieved by maintaining the degree of conversion (per pass) at a low level, for example by a relatively short residence time and/or a relatively low light intensity. In case substantially less disubstituted alkane is produced as described above, there would be no need, after carrying out the preparation method, to remove disubstituted alkane in accordance with the above-mentioned treatment process.

Alkane sulfonic acids and alkane sulfonates may be prepared from alkanes by any known method for preparing alkane sulfonic acids and alkane sulfonates, including methods which comprise alkane sulfoxidation or sulfochlorination, as discussed hereinabove. A suitable preparation method is for example disclosed in EP0599385A1 (Enichem), the disclosure of which is incorporated herein by reference. The starting alkanes may be obtained in any way. A suitable source of such alkanes (paraffins) is the Fischer-Tropsch process wherein a mixture of carbon monoxide and hydrogen is converted into liquid hydrocarbons (paraffins).

In the above-mentioned treatment process, wherein substantially all or part of the disubstituted alkane is removed, such removal may be performed by any suitable separation method known to the skilled person, for example by extraction, recrystallisation, adsorption, absorption or (high pressure) liquid chromotagraphy (HPLC).

For example, in a case where removal of the disubstituted alkane is performed by means of extraction, such treatment may comprise subjecting the alkane sulfonic acid or alkane sulfonate composition to an extraction using at least two solvents, wherein the polarity of one solvent is higher than the polarity of the other solvent(s), resulting in at least two phases one of which is more polar than the other phase(s). In this illustrative embodiment, the solvent having a relatively high polarity may for example be water, methanol, brine or dimethyl sulfoxide (DMSO). Brine is an aqueous solution containing monovalent salt, such as for example sodium chloride. Further, in that embodiment, the solvent having a relatively low polarity may for example be a lower alkanol having of from 3 to 10 carbon atoms, such as 2-butanol, or an aromatic solvent, such as toluene.

In yet another aspect, the present invention relates to a method of treating a hydrocarbon containing formation, comprising the following steps:
a) providing the composition as described above or the composition as obtained by the treatment process as described above, that is to say an alkane sulfonic acid or alkane sulfonate composition which comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1 and is preferably in the range of from 12:1 to 10,000:1, to at least a portion of the hydrocarbon containing formation; and
b) allowing the alkane sulfonic acid or alkane sulfonate from the composition to interact with the hydrocarbons in the hydrocarbon containing formation.

In the above-mentioned method of treating a hydrocarbon containing formation, the alkane sulfonic acid or alkane sulfonate (hereinafter also "AS") is applied in cEOR (chemical Enhanced Oil Recovery) at the location of the hydrocarbon containing formation, more in particular by providing the above-described AS composition to at least a portion of the hydrocarbon containing formation and then allowing the AS from said composition to interact with the hydrocarbons in the hydrocarbon containing formation. Said hydrocarbon containing formation may be a crude oil-bearing formation.

Normally, surfactants for enhanced hydrocarbon recovery are transported to a hydrocarbon recovery location and stored at that location in the form of an aqueous solution containing for example 30 to 35 wt.% of the surfactant. At the hydrocarbon recovery location, such solution would then be further diluted to a 0.05-2 wt.% solution, before it is injected into a hydrocarbon containing formation. By such dilution, an aqueous fluid is formed which fluid can be injected into the hydrocarbon containing formation, that is to say an injectable fluid. The water used in such dilution may originate from the formation from which hydrocarbons are to be recovered, which formation water may have to be pretreated, for example by removing divalent ions. Preferably, said water is brine, which is a monovalent salt (for example NaCl) containing aqueous solution.

The amount of AS surfactant, or the total amount of surfactants in case one or more other surfactants are used, in said injectable fluid, may be of from 0.05 to 2 wt.%, preferably 0.1 to 1.5 wt.%, more preferably 0.1 to 1.0 wt.%, most preferably 0.2 to 0.5 wt.%.

In the present invention, the temperature within the hydrocarbon containing formation may be between 10°C and 150°C, optionally between 30°C and 90°C. Further, in the present invention, the salinity of the water originating from the hydrocarbon containing formation may be between 0.5% and 20% or between 0.5% and 10% or between 1% and 6%.

Hydrocarbons may be produced from hydrocarbon containing formations through wells penetrating such formations. "Hydrocarbons" are generally defined as molecules formed primarily of carbon and hydrogen atoms such as oil and natural gas. Hydrocarbons may also include other elements, such as halogens, metallic elements, nitrogen, oxygen and/or sulfur. Hydrocarbons derived from a hydrocarbon containing formation may include kerogen, bitumen, pyrobitumen, asphaltenes, oils or combinations thereof. Hydrocarbons may be located within or adjacent to mineral matrices within the earth. Matrices may include sedimentary rock, sands, silicilytes, carbonates, diatomites and other porous media.

A "hydrocarbon containing formation" may include one or more hydrocarbon containing layers, one or more non-hydrocarbon containing layers, an overburden and/or an underburden. An overburden and/or an underburden includes one or more different types of impermeable materials. For example, overburden/underburden may include rock, shale, mudstone, or wet/tight carbonate (that is to say an impermeable carbonate without hydrocarbons). For example, an underburden may contain shale or mudstone. In some cases, the overburden/underburden may be somewhat permeable. For example, an underburden may be composed of a permeable mineral such as sandstone or limestone.

Properties of a hydrocarbon containing formation may affect how hydrocarbons flow through an underburden/overburden to one or more production wells. Properties include porosity, permeability, pore size distribution, surface area, salinity or temperature of formation. Overburden/underburden properties in combination with hydrocarbon properties, capillary pressure (static) characteristics and relative permeability (flow) characteristics may affect mobilisation of hydrocarbons through the hydrocarbon containing formation.

Fluids (for example gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. A first boundary may form between a water layer and underburden. A second boundary may form between a water layer and a hydrocarbon layer. A third boundary may form between hydrocarbons of different densities in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult.

Quantification of energy required for interactions (for example mixing) between fluids within a formation at an interface may be difficult to measure. Quantification of energy levels at an interface between fluids may be determined by generally known techniques (for example spinning drop tensiometer). Interaction energy requirements at an interface may be referred to as interfacial tension. "Interfacial tension" as used herein, refers to a surface free energy that exists between two or more fluids that exhibit a boundary. A high interfacial tension value (for example greater than 10 dynes/cm) may indicate the inability of one fluid to mix with a second fluid to form a fluid emulsion. As used herein, an "emulsion" refers to a dispersion of one immiscible fluid into a second fluid by addition of a compound that reduces the interfacial tension between the fluids to achieve stability. The inability of the fluids to mix may be due to high surface interaction energy between the two fluids. Low interfacial tension values (for example less than 1 dyne/cm) may indicate less surface interaction between the two immiscible fluids. Less surface interaction energy between two immiscible fluids may result in the mixing of the two fluids to form an emulsion. Fluids with low interfacial tension values may be mobilised to a well bore due to reduced capillary forces and subsequently produced from a hydrocarbon containing formation. Thus, in surfactant cEOR, the mobilisation of residual oil is achieved through surfactants which generate a sufficiently low crude oil / water interfacial tension (IFT) to give a capillary number large enough to overcome capillary forces and allow the oil to flow.

Mobilisation of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. Capillary forces may be overcome by increasing the pressures within a hydrocarbon containing formation. Capillary forces may also be overcome by reducing the interfacial tension between fluids in a hydrocarbon containing formation. The ability to reduce the capillary forces in a hydrocarbon containing formation may depend on a number of factors, including the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (for example brine, steam), gases, polymers or any combinations thereof to the hydrocarbon containing formation to increase mobilisation of hydrocarbons.

In the present invention, the hydrocarbon containing formation is thus treated with the diluted or not-diluted AS surfactant containing solution, as described above. Interaction of said solution with the hydrocarbons may reduce the interfacial tension of the hydrocarbons with one or more fluids in the hydrocarbon containing formation. The interfacial tension between the hydrocarbons and an overburden/underburden of a hydrocarbon containing formation may be reduced. Reduction of the interfacial tension may allow at least a portion of the hydrocarbons to mobilise through the hydrocarbon containing formation.

The ability of the AS surfactant containing solution to reduce the interfacial tension of a mixture of hydrocarbons and fluids may be evaluated using known techniques. The interfacial tension value for a mixture of hydrocarbons and water may be determined using a spinning drop tensiometer. An amount of the AS surfactant containing solution may be added to the hydrocarbon/water mixture and the interfacial tension value for the resulting fluid may be determined.

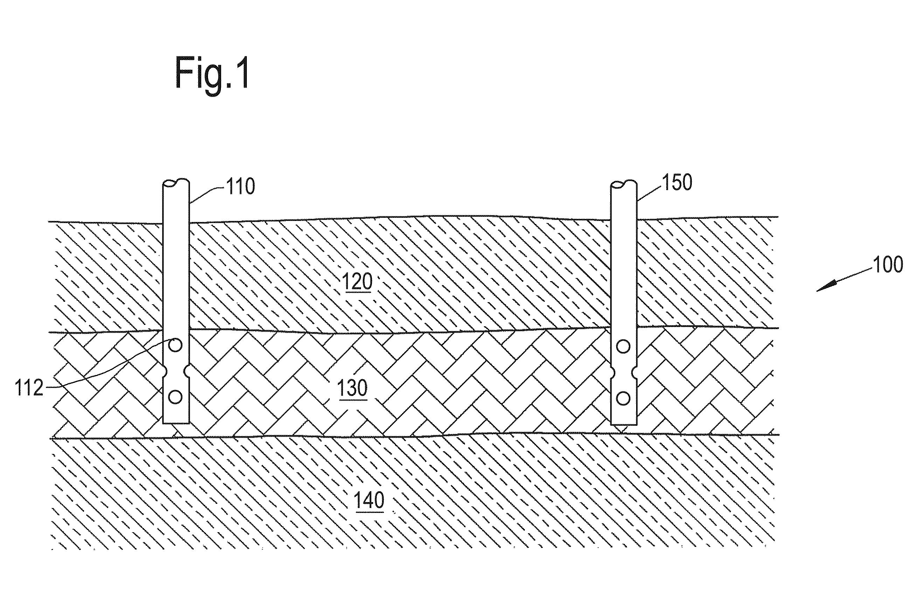

The AS surfactant containing solution, diluted or not diluted, may be provided (for example injected in the form of a diluted aqueous fluid) into hydrocarbon containing formation 100 through injection well 110 as depicted in Figure 1. Hydrocarbon containing formation 100 may include overburden 120, hydrocarbon layer 130 (the actual hydrocarbon containing formation), and underburden 140. Injection well 110 may include openings 112 (in a steel casing) that allow fluids to flow through hydrocarbon containing formation 100 at various depth levels. Low salinity water may be present in hydrocarbon containing formation 100.

The surfactant from the AS surfactant containing solution may interact with at least a portion of the hydrocarbons in hydrocarbon layer 130. This interaction may reduce at least a portion of the interfacial tension between one or more fluids (for example water, hydrocarbons) in the formation and the underburden 140, one or more fluids in the formation and the overburden 120 or combinations thereof.

The surfactant from the AS surfactant containing solution may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. The interfacial tension value between the hydrocarbons and one or more other fluids may be altered by the AS surfactant containing solution to a value of less than 0.1 dyne/cm or less than 0.05 dyne/cm or less than 0.001 dyne/cm.

At least a portion of the AS surfactant containing solution/hydrocarbon/fluids mixture may be mobilised to production well 150. Products obtained from the production well 150 may include components of the AS surfactant containing solution, methane, carbon dioxide, hydrogen sulfide, water, hydrocarbons, ammonia, asphaltenes or combinations thereof. Hydrocarbon production from hydrocarbon containing formation 100 may be increased by greater than 50% after the AS surfactant containing solution has been added to a hydrocarbon containing formation.

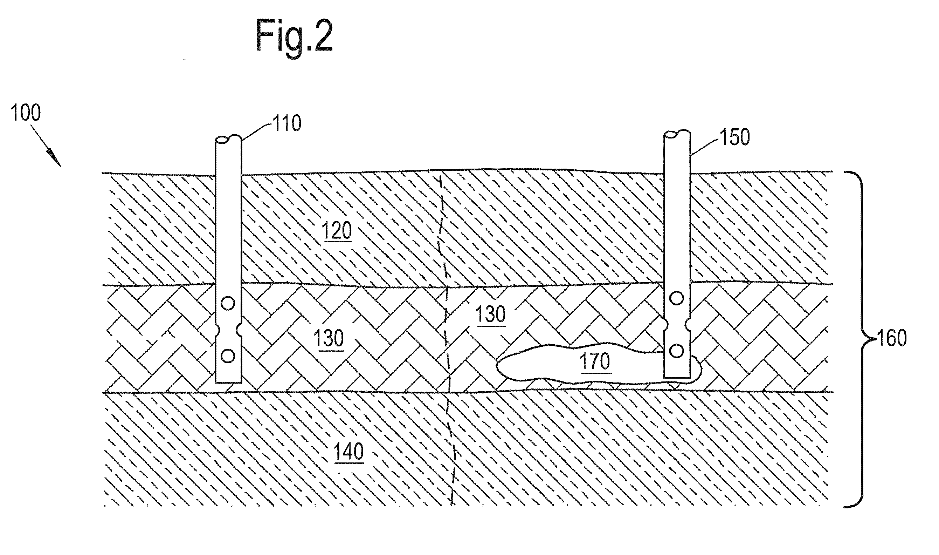

The AS surfactant containing solution, diluted or not diluted, may also be injected into hydrocarbon containing formation 100 through injection well 110 as depicted in Figure 2. Interaction of the surfactant from the AS surfactant containing solution with hydrocarbons in the formation may reduce at least a portion of the interfacial tension between the hydrocarbons and underburden 140. Reduction of at least a portion of the interfacial tension may mobilise at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

It may be beneficial under certain circumstances that an aqueous fluid, wherein the AS surfactant containing solution is diluted, contains inorganic salt, such as sodium chloride, sodium hydroxide, potassium chloride, ammonium chloride, sodium sulfate or sodium carbonate. Such inorganic salt may be added separately from the AS surfactant containing solution or it may be included in the AS surfactant containing solution before it is diluted in water. The addition of the inorganic salt may help the fluid disperse throughout a hydrocarbon/water mixture and to reduce surfactant loss by adsorption onto rock. This enhanced dispersion may decrease the interactions between the hydrocarbon and water interface. The decreased interaction may lower the interfacial tension of the mixture and provide a fluid that is more mobile.

The invention is further illustrated by the following Examples.

### Examples

In the present Examples, three different alkane sulfonate compositions were treated such as to remove disulfonates, and some relevant cEOR performance parameters (cEOR = chemical Enhanced Oil Recovery) for the resulting disulfonate-depleted alkane sulfonate compositions were measured.

The above-mentioned alkane sulfonate compositions were prepared by sulfoxidation of the alkane feedstock by a radical-initiated reaction with sulfur dioxide (SO₂) and oxygen (O₂) in the presence of water, thereby forming mainly secondary alkane sulfonic acids, which were then converted into the corresponding sulfonates by reaction with sodium hydroxide. Three types of alkane (paraffin) feedstocks were used, herein designated as "alkane I", "alkane II" and "alkane III", respectively. Properties of these feedstocks are shown in Table 1 below.

**Table 1**

| | Alkane I | Alkane II⁽³⁾ | Alkane III⁽³⁾ |
|---|---|---|---|
| Composition in terms of carbon number (wt.%) | | | |
| C13 | ≤C13: <1 | 0.00 | 0.00 |
| C14 | 39 | 0.00 | 0.00 |
| C15 | 32 | 0.00 | 0.01 |
| C16 | 19 | 0.01 | 0.12 |
| C17 | 9 | 2.20 | 2.61 |
| C18 | ≥C18: <1 | 43.56 | 9.13 |
| C19 | | 32.77 | 15.11 |
| C20 | | 17.18 | 21.77 |
| C21 | | 3.98 | 25.07 |
| C22 | | 0.21 | 19.54 |
| C23 | | 0.00 | 6.20 |
| C24 | | 0.00 | 0.40 |
| C25 | | 0.00 | 0.00 |
| Total | 100 | 99.91 | 99.96 |
| Weight average carbon number ⁽¹⁾ | 15.0 | 18.8 | 20.4 |
| Linearity⁽²⁾ (wt.%) | - | 92.2 | 92.8 |
| Corresponding alkane sulfonate (AS) | C₁₄₋₁₇ AS; C₁₄₋₁₇ 99 wt.% | C₁₈₋₂₀ AS; C₁₈₋₂₀: 93.51 wt.% | C₁₈₋₂₃ AS; C₁₈₋₂₃ : 96.82 wt.% |

| | | | |
|---|---|---|---|
| (1) "Weight average carbon number" = sum of the products obtained by multiplying the number of carbon atoms (above "carbon number") of each alkane molecule by the weight fraction of that molecule. (2) "Linearity" = (weight of linear molecules based on total weight of branched, linear and cyclic molecules) *100%. (3) Alkanes II and III are paraffins which were made by using the Fischer-Tropsch process wherein a mixture of carbon monoxide and hydrogen is converted into liquid hydrocarbons (paraffins). | | | |

The alkane sulfonates as prepared from alkanes I, II and III are herein designated as "C₁₄₋₁₇ AS", "C₁₈₋₂₀ AS" and "C₁₈₋₂₃ AS", respectively. Said alkane sulfonates were provided in the form of aqueous C₁₄₋₁₇ AS, C₁₈₋₂₀ AS and C₁₈₋₂₃ AS compositions, respectively, of which the alkane sulfonate (active matter) content was 60, 20 and 25 wt.%, respectively.

All alkane sulfonates comprised monosulfonate compounds and disulfonate compounds containing one and two, respectively, sulfonate groups per molecule. The C₁₄₋₁₇ AS, C₁₈₋₂₀ AS and C₁₈₋₂₃ AS compositions were treated such as to remove disulfonates. This removal was effected by either extraction or recrystallization.

In the extraction treatment, the following procedure was performed. 200 ml of a 50/50 (vol./vol.) mixture of two solvents, namely water and 2-butanol, were added to 10 g of the C₁₄₋₁₇ AS composition. The resulting solution was transferred into a separation funnel. A small amount of water was added to compensate for the better solubility of water in 2-butanol compared to the solubility of 2-butanol in water, to arrive at about equal volumes of two separate liquid phases upon extraction by thorough shaking of the separation funnel, one of which 2 phases was more polar than the other. The temperature and pressure during the extraction were ambient temperature and pressure. After the extraction, the less polar and more polar phases were separated from each other. The more polar, water-rich lower layer, that was enriched in disulfonates, was removed and discarded. Finally, the volatile components (2-butanol and water) were removed from the remaining 2-butanol-rich, monosulfonates containing phase using a rotating film evaporator. In a case where extraction of the C₁₄₋₁₇ AS composition was performed multiple times, 2-butanol and water were added to said remaining 2-butanol-rich, monosulfonates containing phase, in such amounts resulting in 2 phases in a 50/50 (vol./vol.) ratio, after which the extraction was performed as mentioned hereinbefore. For the C₁₈₋₂₀ AS and C₁₈₋₂₃ AS compositions, the same extraction procedure was applied (4 extractions in each of said 2 cases).

In the recrystallization treatment, the following procedure was performed. 11 g of the C₁₄₋₁₇ AS composition were dissolved in 200 ml of warmed demineralized water (having a temperature of 50 °C). Then 12 g of sodium chloride (NaCl) were added resulting in the precipitation of a white solid. After cooling to ambient temperature, the precipitate formed was isolated by filtration (paper filter). The precipitate was then washed with two portions of 100 ml of an aqueous 6 wt.% NaCl solution. Then the precipitate was dissolved in 200 ml of 2-butanol. The resulting crystals of NaCl where then removed by filtration (paper filter). Finally, the volatile components (2-butanol and some water) were removed from the filtrate using a rotating film evaporator.

In Table 2 below, if disulfonates were detected, the molar ratio of monosulfonates to disulfonates is included for: (i) the above-mentioned alkane sulfonates before they were treated such as to remove disulfonates therefrom by extraction or recrystallization ("untreated" in Table 2) and (ii) the resulting alkane sulfonates from which disulfonates were removed. The data from Table 2 were obtained by capillary electrophoresis with indirect UV detection.

**Table 2**

| Alkane sulfonate | Mono: Di⁽¹⁾ (molar) |
|---|---|
| C₁₄₋₁₇ AS (untreated) ^{(*)} | 11.3:1 |
| C₁₄₋₁₇ AS (extracted 1 time) | 15.0:1 |
| C₁₄₋₁₇ AS (recrystallized) | 39.0:1 |
| C₁₄₋₁₇ AS (extracted 4 times) | no disulfonates |
| C₁₈₋₂₀ AS (untreated) ^{(*)} | 4.1:1 |
| C₁₈₋₂₀ AS (extracted 4 times) | no disulfonates |
| C₁₈₋₂₃ AS (untreated) ^{(*)} | 0.4:1 |
| C₁₈₋₂₃ AS (extracted 4 times) | 25.4:1 |

| | |
|---|---|
| (1) "Mono" refers to the monosulfonate compounds and "Di" refers to the disulfonate compounds. (*) = not according to the invention | |

In Table 3 below, some cEOR performance parameters are included for the above-mentioned alkane sulfonates. These parameters relate to a desired use of the alkane sulfonates as a surfactant in chemical Enhanced Oil Recovery (cEOR). More in particular, so-called phase behaviour tests were conducted, as described below, in order to determine the optimal salinity and the solubilisation parameter, the values for which are shown in Table 3. Furthermore, data on solubility are included in Table 3.

In order to determine said optimal salinity and solubilisation parameter, aqueous solutions comprising the alkane sulfonate and having different salinities were prepared. In tubes, the aqueous solutions were mixed with n-octane in a volume ratio of 1:1 and the system was allowed to equilibrate for days or weeks at 90 °C. The alkane n-octane was used as a model oil for the screening tests, to represent a simple crude oil.

Microemulsion phase behaviour tests were carried out to screen the surfactants for their potential to mobilize residual oil by means of lowering the interfacial tension (IFT) between the oil and water. Microemulsion phase behaviour was first described by Winsor in "Solvent properties of amphiphilic compounds", Butterworths, London, 1954. The following categories of emulsions were distinguished by Winsor: "type I" (oil-in-water emulsion), "type II" (water-in-oil emulsion) and "type III" (emulsions comprising a bicontinuous oil/water phase). A Winsor Type III emulsion is also known as an emulsion which comprises a so-called "middle phase" microemulsion. A microemulsion is characterised by having the lowest IFT between the oil and water for a given oil/water mixture.

For anionic surfactants, increasing the salinity (salt concentration) of an aqueous solution comprising the surfactant(s) causes a transition from a Winsor type I emulsion to a type III and then to a type II. Optimal salinity is defined as the salinity where equal amounts of oil and water are solubilised in the middle phase (type III) microemulsion. The oil solubilisation ratio is the ratio of oil volume (Vₒ) to neat surfactant volume (Vₛ) and the water solubilisation ratio is the ratio of water volume (V_{w}) to neat surfactant volume (Vₛ). The intersection of Vₒ/Vₛ and V_{w}/Vₛ as salinity is varied, defines (a) the optimal salinity and (b) the solubilisation parameter at the optimal salinity. It has been established by Huh that IFT is inversely proportional to the square of the solubilisation parameter (Huh, "Interfacial tensions and solubilizing ability of a microemulsion phase that coexists with oil and brine", J. Colloid and Interface Sci., September 1979, p. 408-426). A high solubilisation parameter, and consequently a low IFT, is advantageous for mobilising residual oil via surfactant EOR. That is to say, the higher the solubilisation parameter the more "active" the surfactant.

The detailed microemulsion phase test method used in these Examples has been described previously, by Barnes et al. under Section 2.1 "Glass pressure tube test" in "Development of Surfactants for Chemical Flooding at Difficult Reservoir Conditions", SPE 113313, 2008, p. 1-18. In summary, this test provides two important data:
(a) the optimal salinity, expressed as wt.% NaCl;
(b) the solubilisation parameter (SP; in ml/ml; assumption: density surfactant = 1 g/ml) at the optimal salinity (this usually takes several days or weeks to allow the phases to settle at equilibrium), wherein the interfacial tension (IFT, in mN/m) is calculated from the solubilisation parameter using the "Huh" equation IFT=0.3/SP² as referred to above.

**Table 3**

| Alkane sulfonate | Optimal salinity⁽¹⁾ wt.% NaCl | SP⁽¹⁾ ml/ml | Solubility⁽²⁾ wt.% NaCl |
|---|---|---|---|
| C₁₄₋₁₇ AS (untreated)^{(*)} | 10.0+/-0.5 | 5-7 | ≥6; Δ=4.0 |
| C₁₄₋₁₇ AS (extracted 1 time) | 9.6+/-0.5 | 5-7 | ≥6; Δ=3.6 |
| C₁₄₋₁₇ AS (recrystallized) | 7.9+/-0.5 | 5-7 | ≥5; Δ=2.9 |
| C₁₄₋₁₇ AS (extracted 4 times) | 6.9+/-0.5 | 5-7 | ≥5; Δ=1.9 |
| C₁₈₋₂₀ AS (untreated)^{(*)} | 5.0+/-0.5 | 12-18 | ≥3; Δ=2.0 |
| C₁₈₋₂₀ AS (extracted 4 times) | 1.1+/-0.2 | 35-45 | ≥1; Δ=0.1 |
| C₁₈₋₂₃ AS (untreated)^{(*)} | n.d. | n.d. | ≥1 |
| C₁₈₋₂₃ AS (extracted 4 times) | 0.9+/-0.2 | 60-80 | ≥0.25; Δ=0.65 |

| | | | |
|---|---|---|---|
| (1) The aqueous solution used for determining the optimal salinity and the solubilisation parameter (SP) comprised 2 wt.% of the alkane sulfonate, except for C₁₈₋₂₃ AS in which case said concentration was 1 wt.%. (2) Solubility was determined by determining the NaCl salt concentration at which the alkane sulfonate (dissolved in a 0.5 wt.% aqueous solution) started to precipitate at a temperature of 90 °C. The difference (Δ) between the optimal salinity and said solubility is also indicated. n.d. = not determined (*) = not according to the invention | | | |

It appears from Table 3 that alkane sulfonate compositions according to the invention, including all of the above-mentioned C₁₄₋₁₇ AS, C₁₈₋₂₀ AS and C₁₈₋₂₃ AS compositions, wherein either disulfonates were absent or the molar ratio of monosulfonates to disulfonates was equal to or higher than 12:1, can be advantageously used as a surfactant in chemical Enhanced Oil Recovery (cEOR) which requires them to lower the interfacial tension (IFT) between oil and water. Still further, for the C₁₈₋₂₀ AS and C₁₈₋₂₃ AS compositions according to the invention, even a stronger ability to lower the IFT is demonstrated by an increased solubilisation parameter (SP), as compared to those C₁₈₋₂₀ AS and C₁₈₋₂₃ AS compositions wherein disulfonates were not removed (not according to the invention).

Furthermore, it appears from Table 3 that, advantageously, the optimal salinity for all of the above-mentioned alkane sulfonate compositions according to the invention from which disulfonates were partially or completely removed, is decreased which makes them suitable to be used in cEOR methods wherein the crude oil containing reservoir or formation in question contains water (brine) which has a relatively low salinity.

A further advantage of the present invention is that by varying the extent to which disulfonates are removed, for example by extracting one, two, three or four times, it is possible to make the optimal salinity of the alkane sulfonate composition correspond to the salinity of the water (brine) as contained in the crude oil containing reservoir or formation in question. For, upon comparing Table 2 (molar ratio of monosulfonates to disulfonates) with Table 3 (optimal salinity), it appears that there is a relationship between (i) the molar ratio of monosulfonates to disulfonates and (ii) the optimal salinity, implying that the higher said molar ratio the lower said optimal salinity. In other words, the optimal salinity of alkane sulfonate compositions according to the invention can be tuned to a particular, desired value.

Still further, in case the optimal salinity of an alkane sulfonate composition according to the invention would be too high as compared to the salinity of the water (brine) as contained in the crude oil containing reservoir or formation in question, said alkane sulfonates can still be advantageously used in combination with surfactants having a lower optimal salinity. Vice versa, in case the optimal salinity of an alkane sulfonate composition according to the invention would be too low, said alkane sulfonates can still be advantageously used in combination with surfactants having a higher optimal salinity.

The achievement of such lower optimal salinities, as in the present invention, is also surprising in that usually a lower optimal salinity is achieved by elongating the hydrophobic tail of the alkane sulfonate surfactant in question. That is, by increasing the carbon number of that tail. The present invention is different in that by partially or completely removing disulfonates from alkane sulfonates, which disulfonates are automatically formed in any alkane sulfonate production process, the optimal salinity is lowered to a relatively great extent. Thus, an advantage of the present invention is also that the optimal salinity can be lowered for alkane sulfonate surfactant compositions wherein the carbon number of the hydrophobic tail of the surfactant is relatively small (e.g. for said C₁₄₋₁₇ AS), without having to increase said carbon number but simply by partially or completely removing disulfonates. Generally, lower carbon number alkane sulfonates are more abundant (lower molecular weight), more readily available (easier to produce) and more soluble (requiring no or less cosolvent to increase solubility) than higher carbon number alkane sulfonates.

Still further, it appears from Table 3 that alkane sulfonate compositions according to the invention, including all of the above-mentioned C₁₄₋₁₇ AS, C₁₈₋₂₀ AS and C₁₈₋₂₃ AS compositions, wherein either disulfonates were absent or the molar ratio of monosulfonates to disulfonates was equal to or higher than 12:1, have a decreased difference (Δ) between the higher optimal salinity and the lower solubility, which solubility is the NaCl salt concentration at which the alkane sulfonate started to precipitate, because disulfonates were removed. This may also be relevant when these compositions are used in chemical Enhanced Oil Recovery (cEOR). For such decreased difference implies that at or near the optimal salinity the solubility is improved (because of removal of disulfonates), which in turn implies that at or near the optimal salinity no or less cosolvent needs to be used in order to dissolve all of the surfactant.

## Claims

1. Alkane sulfonic acid or alkane sulfonate composition, which composition comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1 and is preferably in the range of from 12:1 to 10,000:1.

2. Alkane sulfonic acid or alkane sulfonate composition according to claim 1, wherein the molar ratio of the monosubstituted alkane to the disubstituted alkane is in the range of from 12:1 to 5,000:1, preferably 15:1 to 1,000:1, more preferably 20:1 to 500:1.

3. Alkane sulfonic acid or alkane sulfonate composition according to claim 1 or 2, wherein the alkanes have an average carbon number in the range of from 5 to 30, preferably 12 to 26, more preferably 14 to 24, more preferably 16 to 24, most preferably 18 to 22.

4. Alkane sulfonic acid or alkane sulfonate composition according to any one of the preceding claims, wherein one or more alkane sulfonic acids or alkane sulfonates are selected from the group consisting of C₁₄₋₁₇ AS, C₁₈₋₂₀ AS, C₁₈₋₂₃ AS and C₁₉₋₂₄ AS, preferably from the group consisting of C₁₄₋₁₇ AS, C₁₈₋₂₀ AS and C₁₈₋₂₃ AS, wherein "AS" stands for "alkane sulfonic acid" or "alkane sulfonate".

5. Alkane sulfonic acid or alkane sulfonate composition according to claim 4, wherein one or more alkane sulfonic acids or alkane sulfonates are selected from the group consisting of C₁₈₋₂₀ AS and C₁₈₋₂₃ AS, preferably C₁₈₋₂₃ AS.

6. Alkane sulfonic acid or alkane sulfonate composition according to any one of the preceding claims, which composition further comprises one or more surfactants selected from the group consisting of internal olefin sulfonates (IOS), alkoxylated alcohol sulfates, carboxylates and glycerol sulfonates, linear alkyl benzene sulfonates (LABS), and heavy alkyl benzene sulfonates (HABS).

7. Process for treatment of an alkane sulfonic acid or alkane sulfonate composition, which composition comprises a monosubstituted alkane substituted by one sulfonic acid or sulfonate group and a disubstituted alkane substituted by two sulfonic acid or sulfonate groups, in which process substantially all of the disubstituted alkane is removed or the disubstituted alkane is removed to such extent that the molar ratio of the monosubstituted alkane to the disubstituted alkane is increased to a value which is equal to or higher than 12:1 and is preferably in the range of from 12:1 to 10,000:1.

8. A method of treating a hydrocarbon containing formation, comprising the following steps:
a) providing an alkane sulfonic acid or alkane sulfonate composition, which composition comprises a monosubstituted alkane substituted by one sulfonic acid or sulfonate group and optionally a disubstituted alkane substituted by two sulfonic acid or sulfonate groups, wherein if the composition comprises said disubstituted alkane the molar ratio of the monosubstituted alkane to the disubstituted alkane is equal to or higher than 12:1 and is preferably in the range of from 12:1 to 10,000:1, or the composition as obtained by the process of claim 7, to at least a portion of the hydrocarbon containing formation; and
b) allowing the alkane sulfonic acid or alkane sulfonate from the composition to interact with the hydrocarbons in the hydrocarbon containing formation.

9. Method according to claim 8, wherein the molar ratio of the monosubstituted alkane to the disubstituted alkane is in the range of from 12:1 to 5,000:1, preferably 15:1 to 1,000:1, more preferably 20:1 to 500:1.

10. Method according to claim 8 or 9, wherein the alkanes have an average carbon number in the range of from 5 to 30, preferably 12 to 26, more preferably 14 to 24, more preferably 16 to 24, most preferably 18 to 22.

11. Method according to any one of claims 8-10, wherein one or more alkane sulfonic acids or alkane sulfonates are selected from the group consisting of C₁₄₋₁₇ AS, C₁₈₋₂₀ AS, C₁₈₋₂₃ AS and C₁₉₋₂₄ AS, preferably from the group consisting of C₁₄₋₁₇ AS, C₁₈₋₂₀ AS and C₁₈₋₂₃ AS, wherein "AS" stands for "alkane sulfonic acid" or "alkane sulfonate".

12. Method according to claim 11, wherein one or more alkane sulfonic acids or alkane sulfonates are selected from the group consisting of C₁₈₋₂₀ AS and C₁₈₋₂₃ AS, preferably C₁₈₋₂₃ AS.

13. Method according to any one of claims 8-12, which composition further comprises one or more surfactants selected from the group consisting of internal olefin sulfonates (IOS), alkoxylated alcohol sulfates, carboxylates and glycerol sulfonates, linear alkyl benzene sulfonates (LABS), and heavy alkyl benzene sulfonates (HABS).
